# EUROPÄISCHE PATENTANMELDUNG

(11) **EP 3 109 045 A1**
(43) Veröffentlichungstag der Anmeldung: **28.12.2016**
(21) Anmeldenummer: 16175390.0
(22) Anmeldetag: 21.06.2016
(51) Int. Cl.: B32B 25/04, A41D 19/015, A41D 31/00, A63B 71/14, B32B 3/14

(54) **HANDSCHUH, INSBESONDERE TORWARTHANDSCHUH, MATERIAL FÜR EINEN HANDSCHUH UND VERFAHREN ZUR HERSTELLUNG EINES HANDSCHUHS**

(30) Priorität: 22.06.2015 DE 102015109959
(71) Anmelder: Hochmuth, Peter, 91757 Treuchtlingen (DE)
(72) Erfinder: Hochmuth, Peter, 91757 Treuchtlingen (DE)
(74) Vertreter: Schröer, Gernot H.

(57) **Zusammenfassung**

Die vorliegende Erfindung betrifft ein Material (2) für einen Handschuh (50), insbesondere einen Torwarthandschuh, umfassend eine Trägerschicht (8), einer erste Materialschicht (4) und zumindest eine zweite Materialschicht (6), wobei die erste Materialschicht (4) und die zumindest eine zweite Materialschicht (6) derart nebeneinander auf der Trägerschicht (8) aufgebracht sind, dass die erste Materialschicht (4) und die zumindest eine zweite Materialschicht (8) in einem Übergangsbereich (10) unmittelbar aneinandergrenzen.

Ferner betrifft die Erfindung einen Handschuh (50), insbesondere einen Torwarthandschuh, mit einem Innenhandteil (14) und einem Außenhandteil (36), wobei das Innenhandteil (14) und das Außenhandteil (36) entweder direkt miteinander oder mit einem zwischen Innenhandteil (14) und Außenhandteil (36) angeordneten Schichtel (24) durch Nähte (16b, 16d, 18b, 18d, 20b, 20d, 22b, 22d, 32b) miteinander verbunden sind, wobei zumindest das Innenhandteil (14) des Handschuhes aus einem solchen Material (2) gefertigt ist sowie ein Verfahren zur Herstellung eines solchen Handschuhs (50).

## Beschreibung

Die vorliegende Erfindung betrifft einen Handschuh, insbesondere einen Torwarthandschuh, mit einem Innenhandteil und einem Außenhandteil, wobei das Innenhandteil und das Außenhandteil entweder direkt miteinander oder mit einem zwischen Innenhandteil und Außenhandteil angeordneten Schichtel durch Nähte miteinander verbunden sind. Des Weiteren betrifft die Erfindung ein Material für einen Handschuh sowie ein Verfahren zur Herstellung eines Handschuhs.

Aus dem Dokument DE 36 41 609 C1 ist ein Haftschaum-Material für Torwarthandschuhe bekannt, bei dem eine Schicht aus Latexschaum auf ein Trägermaterial aufgebracht wird und nach einer teilweisen Vulkanisierung mit Vertiefungen versehen wird, in welche ein zweiter Latexschaum eingegossen wird.

Das Dokument DE 299 05 619 U1 beschreibt einen Sporthandschuh sowie ein mehrlagiges Material für einen Sporthandschuh, bei dem mehrere Polsterteile nebeneinander auf einem Trägermaterial aufgebracht sind, wobei zwischen den Polsterteilen Lücken, Rillen oder Abstände vorgesehen sind. Dies dient insbesondere dazu, die Außenhandseiet des Handschuhs optisch in unterschiedlichen Farben gestalten zu können. Auf der Innenhandseite kann eine Lücken aufweisende Oberfläche jedoch nachteilig sein, da beispielsweise die Fangeigenschaften negativ beeinträchtigt werden können.

Es ist Aufgabe der vorliegenden Erfindung, ein Material für einen Handschuh und einen Handschuh, insbesondere einen Torwarthandschuh, mit verbesserten Fang- und Greifeigenschaften zu schaffen, der zudem gute Verschleißeigenschaften aufweist und möglichst einfach zu fertigen ist. Ebenso ist es Aufgabe der vorliegenden Erfindung ein Verfahren zur Herstellung eines solchen Handschuhes anzugeben.

Die erstgenannte Aufgabe wird gelöst durch ein Material gemäß den Merkmalen des Anspruches 1. Das Material für einen Handschuh, insbesondere einen Torwarthandschuh, umfasst eine Trägerschicht, eine erste Materialschicht und zumindest eine zweite Materialschicht, wobei die erste Materialschicht und die zumindest eine zweite Materialschicht derart nebeneinander auf der Trägerschicht aufgebracht sind, dass die erste Materialschicht und die zumindest eine zweite Materialschicht in einem Übergangsbereich unmittelbar aneinandergrenzen.

Jede Materialschicht ist somit direkt nebeneinander auf der Trägerschicht aufgebracht und überlappen sich nicht oder nur unwesentlich, sodass eine einlagige Materialschicht, bestehend aus der ersten und der zweiten Materialschicht, auf der Trägersicht vorhanden ist. Das Aufbringen der ersten und der zweiten Materialschicht erfolgt beispielsweise durch Aufgießen der Materialschichten auf eine sich kontinuierlich bewegende Trägerschicht. Eine gute Verbindung der ersten Materialschicht mit der zweiten Materialschicht und der Trägerschicht kann beispielsweise durch Vulkanisation erreicht werden. In dem Übergangsbereich, also an einer Grenzfläche zwischen der ersten und der zweiten Materialschicht grenzen diese direkt aneinander und sind ohne eine dazwischenliegende Naht fest miteinander verbunden. Auch mit der Trägerschicht sind die erste und die zweite Materialschicht ohne Naht verbunden. Das Fehlen einer solchen Naht, welche eine Schwachstelle im Material darstellen kann, hat den Vorteil, dass eine sichere Verbindung der Materialschichten gewährleistet ist. Des Weiteren wird bei der Herstellung des Materials ein Arbeitsschritt eingespart.

Die Trägerschicht umfasst beispielsweise ein Textilmaterial, bei der ein Polstermaterial zwischen zwei Stoffbahnen eingeschlossen ist. Zusammen mit der ersten und zweiten Materialschicht bildet die Trägerschicht eine flexible Textil- oder Stoffbahn, welche als Ausgangsmaterial für die Herstellung eines Handschuhes, insbesondere dessen Innenhandteils dient.

Die erste und die zweite Materialschicht des Innenhandteils sind nebeneinander auf der Trägerschicht aufgebracht. Dabei bilden die erste Materialschicht und die zweite Materialschicht eine gemeinsame Oberfläche aus, wobei bei einer bevorzugten Ausgestaltung, eine Dicke der ersten Materialschicht und eine Dicke der zweiten Materialschicht über die Oberfläche konstant sind. Hierfür wird den die erste und zweite Materialschicht aufbringenden Aufbringvorrichtungen beispielsweise ein Streichmesser bzw. eine Rakel nachgeführt, welche eine glatte, ebene Oberfläche erzeugt. Denkbar wäre es auch, einen Teil der Oberfläche, z.B. mittels eines Schneidmessers abzutrennen, um gleich hohe erste und zweite Materialschichten zu erzeugen. Die erste und zweite Materialschicht bilden folglich eine ebene, nahtlose Fläche aus, was insbesondere bei der Verwendung in einem Innenhandteil eines Handschuhes von Vorteil ist, da bestimmte Materialeigenschaften, wie z.B. die Griffigkeit des Handschuhs, über die gesamten Handinnenfläche vorhanden sind, da ein aus dem Material gefertigtes Innenhandteil keine Erhöhungen, Vertiefungen oder gar Lücken aufweist.

Der Übergangsbereich zwischen der ersten Materialschicht und der zweiten Materialschicht weist bei einer bevorzugten Ausgestaltung bezogen auf eine Längsrichtung der Trägerschicht einen zumindest teilweise gekrümmten Verlauf auf. Die erste und die zweite Materialschicht sind also derart nebeneinander auf die Trägerschicht aufgebracht, dass deren aneinander grenzende Grenzfläche beispielsweise einen wellenförmigen Verlauf mit gegebenenfalls dazwischen liegenden geradlinigen Abschnitten aufweist. Eine solche Struktur des Materials wird beispielsweise dadurch erreicht, dass während des Aufgießens der Materialschichten aus jeweils einer Aufbringvorrichtung auf die sich in Längsrichtung bewegende Trägerschicht, die Aufbringvorrichtungen quer zur Laufrichtung hin und her bewegt werden. Dies hat den Vorteil, dass bei der Herstellung eines Innenhandteils des Handschuhs, dieser derart aus dem Material bzw. der Textilbahn gefertigt werden kann, dass gewünschte Bereiche des Innenhandteils aus der ersten Materialschicht oder der zweiten Materialschicht bestehen.

Die erste und die zweite Materialschicht sind insbesondere jeweils aus einer Latexmasse gebildet. Dabei ist von Vorteil, dass z.B. geschäumtes Latexmaterial gute Haft- und Polstereigenschaften aufweist.

In einer vorteilhaften Ausführungsform unterscheiden sich die erste Materialschicht und die zumindest eine zweite Materialschicht zumindest hinsichtlich einer Materialeigenschaft. Dabei unterscheiden sich die erste und die zumindest eine zweite Materialschicht insbesondere in ihrer Farbe und/oder Griffigkeit und/oder Abriebfestigkeit und/oder Härte. Dies ermöglicht es, ein durchgehendes, nahtloses Innenhandteil aus dem Material zu fertigen, welches dennoch hinsichtlich seiner Eigenschaften an die unterschiedlichen Handbereiche, also Fingerbereiche, Daumenbereich und Handtellerbereich, individuell angepasst werden kann. In einer einfachsten Variante kann dabei durch verschiedene Farben eine optische Gestaltung des Innenhandteils erreicht werden.

Die zweitgenannte Aufgabe wird gelöst mit einem Handschuh, insbesondere einem Torwarthandschuh gemäß den Merkmalen des Anspruches 7. Der Handschuh, insbesondere Torwarthandschuh, umfasst ein Innenhandteil und ein Außenhandteil, wobei das Innenhandteil und das Außenhandteil entweder direkt miteinander oder mit einem zwischen Innenhandteil und Außenhandteil angeordneten Schichtel durch Nähte miteinander verbunden sind. Zumindest das Innenhandteil ist aus einem Material mit den vorstehend beschriebenen Eigenschaften bzw. aus einer flexiblen Textil- oder Stoffbahn, welche aus dem vorstehend beschriebenen Material gebildet ist, gefertigt. Das Material für das Innenhandteil ist also aus einer Trägerschicht, einer ersten Materialschicht und zumindest einer zweiten Materialschicht gebildet, wobei die erste Materialschicht und die zumindest eine zweite Materialschicht derart nebeneinander auf der Trägerschicht aufgebracht sind, dass die erste Materialschicht und die zumindest eine zweite Materialschicht in einem Übergangsbereich unmittelbar aneinandergrenzen.

Die erste und die zweite Materialschicht sind also auf der gemeinsamen Trägerschicht, z.B. aus einem Textilmaterial, direkt und ohne eine Naht miteinander verbunden. Die Trägerschicht weist beispielsweise eine Sandwichstruktur auf, bei der ein Polstermaterial zwischen zwei Stoffbahnen eingeschlossen ist, wodurch der Aufprall beim Fangen eines Balles zusätzlich gedämpft wird. Zur Fertigung des Innenhandteils wird dieses beispielsweise aus der Textilbahn ausgestanzt oder ausgeschnitten. Dies hat den Vorteil, dass das Innenhandteil einstückig ausgebildet ist und kein Vernähen einzelner Bereiche, z.B. der Fingerbereiche mit dem Handtellerbereich, erforderlich ist, wodurch die Haltbarkeit des Handschuhs erhöht wird.

In einer bevorzugten Ausgestaltung, sind das Innenhandteil und das Außenhandteil zumindest in einem seitlichen Zeigefingerbereich, in einem seitlichen Mittelfingerbereich, in einem seitlichen Ringfingerbereich und in einem seitlichen Kleinfingerbereich mit einem zwischen Innenhandteil und Außenhandteil angeordneten Schichtel durch innen liegende Nähte miteinander verbunden, wobei das Innenhandteil und das Außenhandteil jeweils mit dem Schichtel vernäht sind und so einen Fingeraufnahmeraum formen. In einem vorderen Zeigefingerbereich, in einem vorderen Mittelfingerbereich, in einem vorderen Ringfingerbereich und in einem vorderen Kleinfingerbereich, also in einem Bereich der Fingerspitzen, können das Innenhandteil und das Außenhandteil ebenfalls mit einem dazwischen angeordneten Schichtel oder auch unmittelbar miteinander durch eine innen liegende Naht verbunden sein. Unter einer innen liegenden oder auch negativen Naht ist eine Naht zu verstehen, bei der zwei nach innen geschlagene Kanten, eine Kante des Innenhandteils und eine Kante des Außenhandteils, miteinander verbunden sind.

Durch die Schichtel wird die Atmungsaktivität des Handschuhs verbessert, sodass eine Transpiration vermindert wird. Dies führt zu einem besseren Sitz des Handschuhs an der Hand sowie zu einem erhöhten Tragekomfort.
Wenigstens in einem Daumenbereich ist das Innenhandteil mit dem Außenhandteil vorzugsweise durch eine Daumennaht verbunden, wobei die Daumennaht zumindest teilweise durch eine außen liegende Naht gebildet ist. Unter einer außen liegenden oder auch positiven Naht ist eine Naht zu verstehen, bei der zwei nach außen geschlagene Kanten, eine Kante des Innenhandteils und eine Kante des Außenhandteils, miteinander verbunden sind. Eine solche nach außen liegende Naht erhöht die taktile Empfindlichkeit, sodass das zu greifende Objekt haptisch und/oder taktil besser wahrgenommen werden kann. Gerade im Bereich des Daumens, welcher beim Greifen eines Objektes, z.B. eines Balles, eine entscheidende Rolle spielt, ist eine außen liegende Naht daher von Vorteil.

Bei einer weiteren bevorzugten Ausgestaltung ist vorgesehen, dass das Innenhandteil das Außenhandteil in dem Daumenbereich zumindest teilweise überlappt, wobei ein das Außenhandteil überlappender Bereich des Innenhandteils auf einer Außenseite des Außenhandteils mit diesem verbunden ist. Das Innenhandteil und das Außenhandteil sind in dem überlappenden Bereich mit einer überlappenden Naht verbunden, welche zwei sich überlappende Kanten miteinander verbindet. Der überlappende Bereich ist beispielsweise an der dem Zeigefingerbereich zugewandten Seite des Daumenbereichs vorhanden, um die Greifeigenschaften weiter zu verbessern. Zudem wird durch eine solche Überlappung eine in dem dem Zeigefingerbereich zugewandten Daumenbereich vorhandene Daumennaht, welche beim Öffnen der Hand, z.B. beim Fangen eines Balls, einer größeren Belastung ausgesetzt ist, überdeckt und deren Haltbarkeit somit erhöht.

Das Innenhandteil weist vorteilhafterweise zwischen dem Daumenbereich und dem Zeigefingerbereich eine Ausnehmung auf. Dabei sind das Innenhandteil und das Außenhandteil jeweils in einem Randbereich der Ausnehmung mit einer Zwischenschicht verbunden, welche die Ausnehmung vollständig überdeckt. Das Innenhandteil und das Außenhandteil sind also in diesem Bereich nicht direkt, sondern über die Zwischenschicht miteinander verbunden, sodass ein ausreichend großer Fingeraufnahmeraum für den Daumen bestehen bleibt. Die Zwischenschicht ist beispielsweise aus einem einschichtigen und elastischem Textilmaterial gebildet und überlappt die Ausnehmung in ihren Randbereichen, sodass die Zwischenschicht mit dem Innenhandteil und dem Außenhandteil verbunden, z.B. vernäht oder verklebt werden kann, um die Ausnehmung vollständig zu verschließen bzw. zu überdecken. Dies hat den Vorteil, dass der Handschuh für den Daumen eine bessere Beweglichkeit beim Öffnen und Schließen der Hand bietet und vor allem das Zugreifen, z.B. beim Fangen eines Balles, erleichtert wird. Die Greifposition kann leichter eingenommen werden, da die Zwischenschicht einen geringeren Widerstand bietet, als ein durchgehendes, aus einer Trägerschicht und einer ersten und/oder zweiten Materialschicht bestehendes Innenhandteil. Auch beim Abwurf des Balles ist ein beweglicherer Daumen von Vorteil, da dies eine bessere Führung des Balles ermöglicht.

Das Innenhandteil ist vorzugsweise derart aus dem Material bzw. einer aus dem Material bestehenden Textilbahn gefertigt, dass es zumindest in einem Handtellerbereich von der Trägerschicht und der darauf aufgebrachten ersten Materialschicht gebildet ist. Ein Daumenbereich des Innenhandteils kann ebenfalls zumindest teilweise aus dem Material, umfassend die Trägerschicht und die erste Materialschicht gebildet sein.

Ferner ist das Innenhandteil derart aus dem Material gefertigt, dass es zumindest in dem Zeigefingerbereich, dem Mittelfingerbereich, dem Ringfingerbereich und dem Kleinfingerbereich von der Trägerschicht und der darauf aufgebrachten zweiten Materialschicht gebildet ist. Mit anderen Worten: Der Übergangsbereich zwischen der ersten Materialschicht und der zweiten Materialschicht trennt den Handtellerbereich von dem Zeigefingerbereich, dem Mittelfingerbereich, dem Ringfingerbereich und dem Kleinfingerbereich. Der Übergangsbereich verläuft somit entlang des Übergangs der Fingerbereiche in den Handtellerbereich.

Eine derartige Ausgestaltung des Innenhandteils bzw. die von der ersten Materialschicht und der zweiten Materialschicht gebildeten Bereiche des Innenhandteils werden dadurch erreicht, dass das Innenhandteil in entsprechender Form durch Positionierung des Stanzwerkzeugs oder Schneidewerkzeuges aus dem Material ausgestanzt oder ausgeschnitten wird.

Hinsichtlich des Verfahrens wird die Aufgabe gelöst mit einem Verfahren zur Herstellung eines Handschuhes gemäß den Merkmalen des Anspruches 14.

In einem ersten Schritt werden eine erste und zumindest eine zweite Materialschicht gemeinsam auf eine Trägerschicht aufgebracht und zwar derart, dass sie unmittelbar aneinandergrenzen. Es wird also ein Material bzw. eine flexible Textilbahn hergestellt, die die Trägerschicht, die erste und die zumindest eine zweite Materialschicht umfasst.

In einem weiteren Schritt wird aus dem Material bzw. aus der Textilbahn zumindest das Innenhandteil für den Handschuh gefertigt, z.B. ausgestanzt oder ausgeschnitten. Die Herstellung des Außenhandteils kann ebenfalls aus einem solchen Material erfolgen.

In einem nachfolgenden Schritt werden das Innenhandteil und das Außenhandteil entweder direkt miteinander oder mit einem zwischen Innenhandteil und Außenhandteil angeordneten Schichtel durch Nähte miteinander verbunden werden.

Die Herstellung des Materials gemäß dem ersten Schritt des Verfahrens erfolgt insbesondere dadurch, dass die erste und die zweite Materialschicht gleichzeitig auf die Trägerschicht aufgebracht werden. Dabei wird die Trägerschicht in einer Längsrichtung kontinuierlich bewegt und die jeweilige Aufbringvorrichtung für die erste und die zweite Materialschicht wird in einer Querrichtung der Trägerschicht hin und her bewegt. Dadurch lässt sich eine einlagige Materialschicht auf der Trägerschicht erzeugen, wobei der Übergangsbereich zwischen der ersten und der zweiten Materialschicht entlang einer zumindest teilweise gekrümmten Linie verläuft. Bei der Fertigung des Innenhandteils lässt sich beispielsweise das Stanzwerkzeug derart positionieren, dass die erste Materialschicht und die zweite Materialschicht entsprechende Bereiche des Innenhandteils bilden.

Denkbar ist es auch, während des Aufbringens der ersten und der zweiten Materialschicht auf eine sich kontinuierlich in Längsrichtung bewegende Trägerschicht eine Art Blenden vor den Aufbringvorrichtung einzusetzen, die kontinuierlich und gegenläufig zueinander geöffnet und geschlossen werden, um einen entlang einer gekrümmten Linie verlaufenden Übergangsbereich zu erzeugen. Auch durch Variation des Massenzuflusses der ersten und der zweiten Materialschicht kann ein wellenförmiger Übergangsbereich erzeugt werden, da sich das Material während des Aufgießens unterschiedlich ausbreiten kann.

Alternativ zu einem gleichzeitigen Aufbringen der ersten und der zweiten Materialschicht, können die erste und die zweite Materialschicht auch nacheinander auf die Trägerschicht aufgebracht werden. Hierbei wird beispielsweise zunächst die erste Materialschicht auf die Trägerschicht aufgebracht und vorvulkanisiert. Nachfolgend kann ein beliebig geformter Teil der ersten Materialschicht, beispielsweise mit einem Schneidmesser wieder entfernt werden, und die so entstandene freie Fläche auf der Trägerschicht mit der zweiten Materialschicht gefüllt werden.

Der fertig hergestellte Handschuh wird anschließend beispielsweise in einem Handgelenksbereich mit einem Laschenklettverschluss versehen. Ebenso können auf dem Außenhandteil und/oder dem Innenhandteil beispielsweise verschiedene Gestaltungselemente oder zusätzliche, die Hand schützende Schutzelemente aufgebracht werden.

Die Erfindung wird nun anhand von Ausführungsbeispielen näher erläutert, wobei Bezug auf die beigefügten Zeichnungen genommen wird. Es zeigen jeweils in schematischer Darstellung
- FIG 1: ein Material für einen Handschuh, mit einer Trägerschicht, einer ersten Materialschicht und einer zweiten Materialschicht in einer Draufsicht,
- FIG 2: ein Material gemäß FIG 1 in einer Schnittdarstellung gemäß Schnittebene A,
- FIG 3: eine handtellerseitige Ansicht eines Handschuhs gemäß einer ersten Ausführungsform,
- FIG 4: eine handtellerseitige Ansicht eines Handschuhs gemäß einer weiteren Ausführungsform,
- FIG 5: eine kleinfingerseitige Ansicht des Handschuhs gemäß FIG 3,
- FIG 6: eine zeigefingerseitige Ansicht des Handschuhs gemäß FIG 3,
- FIG 7: ein Verfahren zur Herstellung eines Innenhandteils des Handschuhs.

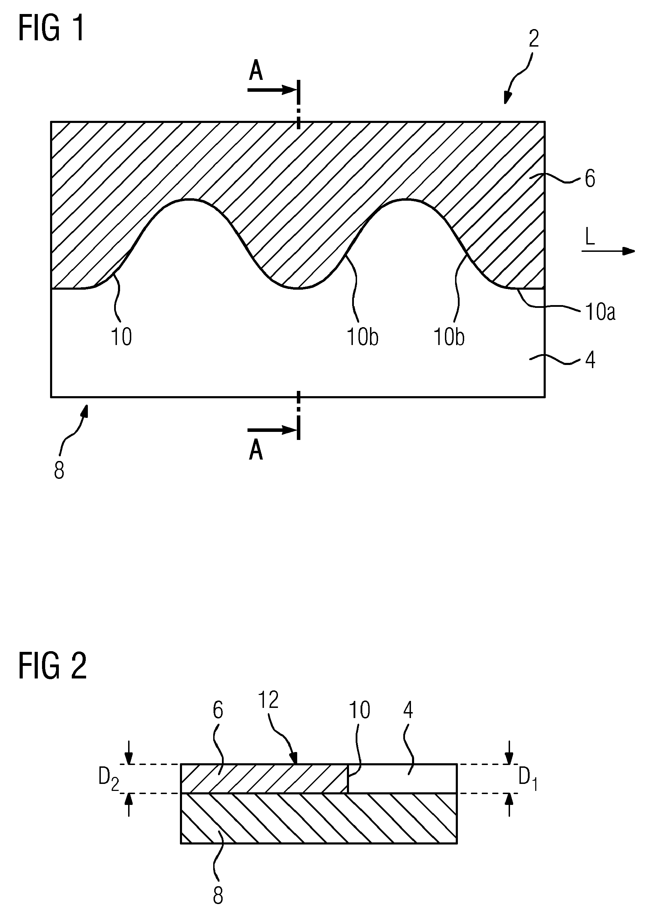

FIG 1 zeigt eine Draufsicht eines Materials 2 für einen Handschuh, welches eine Trägerschicht 8, eine erste Materialschicht 4 und zumindest eine zweite Materialschicht 6 umfasst. Die erste Materialschicht 4 und die zweite Materialschicht 6 sind flächig nebeneinander auf die Trägerschicht 8 aufgebracht und grenzen in einem Übergangsbereich 10 unmittelbar und nahtlos aneinander, sind also jeweils mit der Trägerschicht 8 und direkt miteinander verbunden.

Der Übergangsbereich 10 zwischen der ersten Materialschicht und der zweiten Materialschicht weist bezogen auf eine Längsrichtung L der Trägerschicht 8 einen teilweise gekrümmten Verlauf auf. Es sind also Bereiche 10a, in denen der Übergangsbereich 10 zumindest nahezu parallel zu der Längsrichtung L der Trägerschicht 8 verläuft und Bereiche 10b, in denen der Übergangsbereich nicht parallel zu der Längsrichtung L der Trägerschicht 8 verläuft, vorhanden. Mit anderen Worten weist der Übergangsbereich 10 größtenteils eine wellenförmige Form auf. Dies hat den Vorteil, dass ein aus dem Material 2 gefertigtes Innenhandteil durch Positionieren des Stanzwerkzeuges derart ausgestanzt werden kann, dass die erste Materialschicht 4 und die zweite Materialschicht 6 in gewünschten Bereichen des Innenhandteils vorhanden sind.

In FIG 2 ist eine Schnittdarstellung gemäß der in FIG 1 eingezeichneten Schnittebene A gezeigt. Die erste Materialschicht 4 und die zweite Materialschicht 6 bilden zusammen eine gemeinsame Oberfläche 12 aus. Eine Dicke D₁ der ersten Materialschicht 4 und eine Dicke D₂ der zweiten Materialschicht 6 über die Oberfläche 12 konstant ist. Hierfür wird die Materialschicht beispielsweise nach dem Aufgießen mit einem Streichmesser glatt gestrichen. Die erste Materialschicht 4 und die zweite Materialschicht 6 bilden somit eine ebene Oberfläche 12, welche über das gesamte Material 2 denselben Abstand zu der Trägerschicht 8 aufweist.

Die erste Materialschicht 4 und die zweite Materialschicht 6 sind jeweils aus einer Latexmasse gebildet, unterscheiden sich jedoch in ihren Materialeigenschaften. Das Latexmaterial der ersten Materialschicht 4 und das Latexmaterial der zweiten Materialschicht 6 weisen unterschiedliche Farben auf. Zudem unterscheiden sie sich hinsichtlich ihrer Griffigkeit, was insbesondere in Bezug auf die Fangeigenschaften beim Einsatz in einem Handschuh von Vorteil ist. Hierfür ist beispielsweise ein Haftkleber in das Latexmaterial eingearbeitet, wobei sich dessen Gehalt in der ersten Materialschicht 4 von dem in der zweiten Materialschicht 6 unterscheidet. Ferner können weitere Materialeigenschaften der ersten Materialschicht 4 und der zweiten Materialschicht 6, wie z.B. die Abriebfestigkeit oder die Härte des Materials, durch die Zugabe von Additiven in unterschiedlichen Mengen variiert werden.

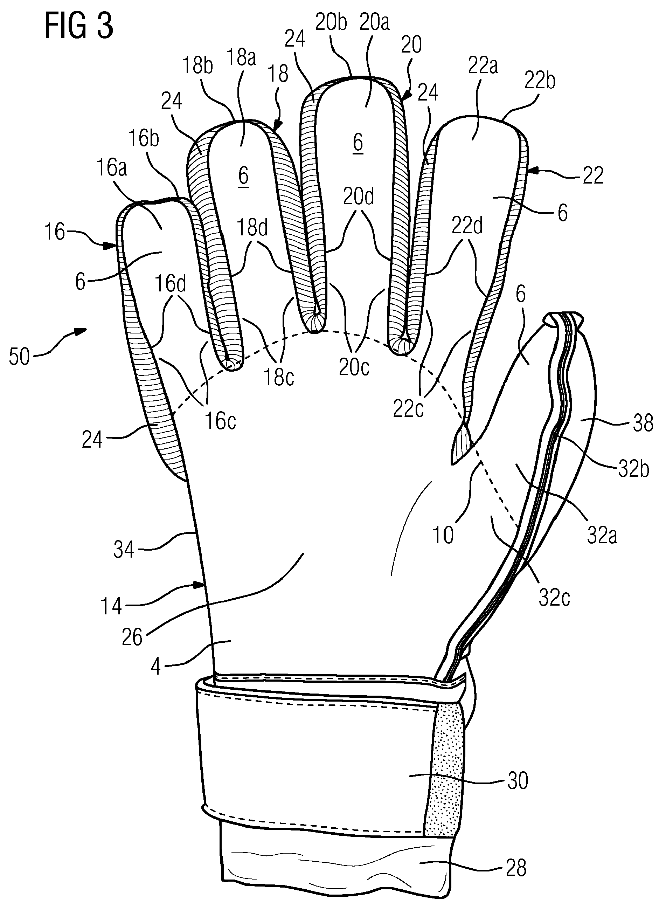

In FIG 3 ist eine handtellerseitige Ansicht eines Handschuhs 50 mit einem sichtbaren Innenhandteil 14 und einem nicht sichtbaren Außenhandteil gemäß einer ersten Ausführungsform dargestellt. Das Innenhandteil 14 ist mit dem Außenhandteil teilweise direkt verbunden, nämlich in vorderen Bereichen 16a, 18a, 20a, 22a des Kleinfingerbereichs 16, des Ringfingerbereichs 18, des Mittelfingerbereichs 20 und des Zeigefingerbereichs 22. Mit anderen Worten sind das Innenhandteil 14 und das Außenhandteil in einem Fingerspitzenbereich unmittelbar miteinander jeweils durch Nähte und zwar durch eine vordere Kleinfingernaht 16b, eine vordere Ringfingernaht 18b, eine vordere Mittelfingernaht 20b und eine vordere Zeigefingernaht 22b vernäht, die jeweils als innen liegende Naht ausgebildet sind.

In einem seitlichen Kleinfingerbereich 16c, einem seitlichen Ringfingerbereich 18c, in einem seitlichen Mittelfingerbereich 20c und in einem seitlichen Zeigefingerbereich 22c sind das Innenhandteil 14 und das Außenhandteil über ein dazwischen angeordnetes Schichtel 24 miteinander verbunden. Dabei sind das Innenhandteil 14 und das Außenhandteil jeweils über seitliche Kleinfingernähte 16d, seitliche Ringfingernähte 18d, die seitliche Mittelfingernähte 20d und die seitliche Zeigefingernähte 22d mit dem Schichtel 24 vernäht und formen einen Fingeraufnahmeraum. Die seitlichen Kleinfingernähte 16d, die seitlichen Ringfingernähte 18d, die seitlichen Mittelfingernähte 20d und die seitlichen Zeigefingernähte 22d sind als innen liegende Naht ausgebildet und gehen in einem zwischen den Fingerbereichen 16c, 18c, 20c, 22c und einem Handtellerbereich 26 ineinander über. Das Innenhandteil 14 und das Außenhandteil sind somit zwischen jeweils benachbarten Finger über ein gemeinsames Schichtel 24 verbunden.

In einem Handgelenkbereich 28 ist ein Laschenklettverschluss 30 angeordnet welcher in individueller Größe einstellbar ist und somit einen sicheren Halt des Handschuhs 50 gewährleistet.

Das Innenhandteil 14 besteht aus einem Material 2 umfassend eine erste Materialschicht 4 und eine zweite Materialschicht 6, die nebeneinander auf einer gemeinsamen Trägerschicht 8 aufgebracht sind, wobei die Trägerschicht 8 bei dem Handschuh 50 innenliegend angeordnet und somit nicht sichtbar ist. Die erste Materialschicht 4 und die zweite Materialschicht 6 bilden hingegen die nach außen sichtbare Oberfläche des Innenhandteils des Handschuhs 50. Das Innenhandteil ist derart aus dem Material 2 gefertigt, z.B. ausgestanzt, dass zumindest der Handtellerbereich 26 von der Trägerschicht 8 und der darauf aufgebrachten ersten Materialschicht 4 gebildet ist. In dem Kleinfingerbereich 16, in dem Ringfingerbereich 18, in dem Mittelfingerbereich 20, in dem Zeigefingerbereich 22 sowie in einem vorderen Daumenbereich 32a ist das Innenhandteil 14 von der Trägerschicht 8 und der darauf aufgebrachten zweiten Materialschicht 6 gebildet. Ein unterer Daumenbereich 32c, welcher als dem Handtellerbereich 26 zugewandter und in diesen übergehender Bereich zu verstehen ist, ist von der Trägerschicht 8 und der ersten Materialschicht 4 gebildet. Der nahtlose Übergangsbereich 10 zwischen der ersten Materialschicht 4 und der zweiten Materialschicht 6 - hier gestrichelt dargestellt - verläuft somit entlang des Übergangs der Fingerbereiche 16c, 18c, 20c, 22c in den Handtellerbereich 26 und trennt den vorderen Daumenbereich 32a von dem unteren Daumenbereich 32c.

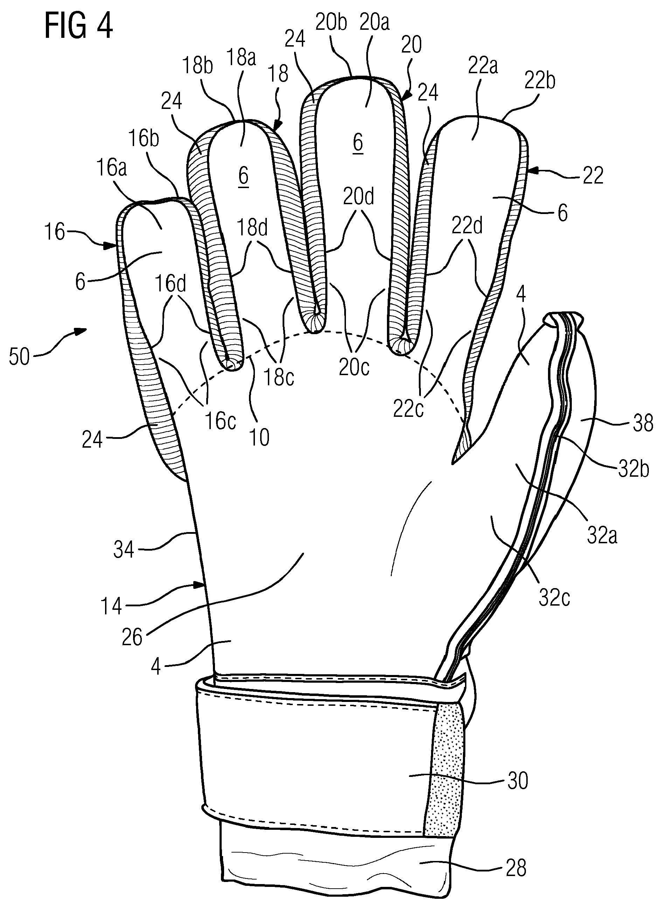

In FIG 4 ist eine handtellerseitige Ansicht eines Handschuhs 50 mit einem sichtbaren Innenhandteil 14 und einem nicht sichtbaren Außenhandteil gemäß einer weiteren Ausführungsform dargestellt. Das Innenhandteil 14 und das Außenhandteil des Handschuhes 12 gemäß FIG 4 sind ebenso wie bei dem Handschuh gemäß der ersten Ausführungsform teilweise direkt miteinander vernäht, nämlich in einem Bereich der Fingerspitzen 16a, 18a, 20a, 22a. In seitlichen Fingerbereichen 16c, 18c, 20c, 22c sind das Innenhandteil 14 und das Außenhandteil jeweils über Schichtel 24 miteinander verbunden.

Im Gegensatz zu der ersten Ausführungsform ist das Innenhandteil 14 derart aus dem Material 2 gefertigt, dass der gesamte Daumenbereich 32, also neben dem unteren Daumenbereich 32c auch der vordere Daumenbereich 32a von der Trägerschicht 8 und der ersten Materialschicht 4 gebildet wird. Das Innenhandteil 14 ist also lediglich in dem Kleinfingerbereich 16, in dem Ringfingerbereich 18, in dem Mittelfingerbereich 20 und in dem Zeigefingerbereich 22 von der Trägerschicht 8 und der zweiten Materialschicht 6 gebildet. Dies hat den Vorteil, dass beispielsweise bei der Verwendung eines stärker dämpfenden oder griffigeren Materials als erste Materialschicht 4, der Daumenbereich 32 ebenso wie der Handtellerbereich 26 beim Fangen eines Balles zusätzlich geschützt werden kann oder ein Zugreifen erleichtert wird.

Der nahtlose Übergangsbereich 10 zwischen der ersten Materialschicht 4 und der zweiten Materialschicht 6 - hier gestrichelt dargestellt - verläuft somit lediglich entlang des Übergangs der Fingerbereiche 16c, 18c, 20c, 22c in den Handtellerbereich 26.

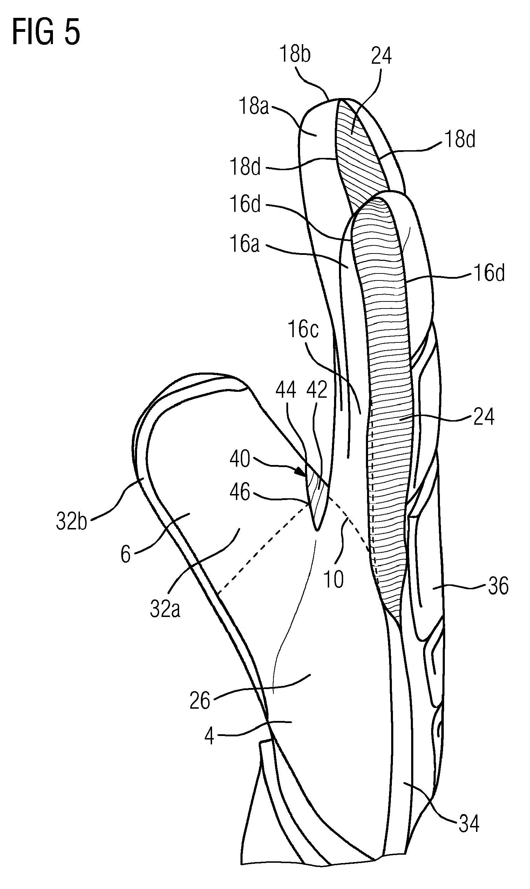

FIG 5 zeigt eine kleinfingerseitige Ansicht des Handschuhs 50 gemäß dem Ausführungsbeispiel nach FIG 3, bei der neben dem Innenhandteil 14 auch das Außenhandteil 36 sichtbar ist. In dem nach außen gewandten, seitlichen Kleinfingerbereich 16c geht die seitliche Kleinfingernaht 16d in eine innen liegende Handkantennaht 34 über.

Das Innenhandteil 14 weist zwischen dem Daumenbereich 32c und dem Zeigefingerbereich 22c eine Ausnehmung 40 auf. Das Innenhandteil 14 und das Außenhandteil sind über eine Zwischenschicht 42 verbunden, welche in einem Randbereich 44 der Ausnehmung 40 mit dem Außenhandteil und in einem weiteren Randbereich 46 mit dem Innenhandteil 14 verbunden ist. Die Zwischenschicht 42 überdeckt somit die Ausnehmung 40 vollständig und gewährleistet dennoch einen ausreichenden Fingeraufnahmeraum zur Aufnahme des Daumens.

Das Innenhandteil 14 und das Außenhandteil 36 sind in einem Daumenbereich 32a, 32c durch eine Daumennaht 32b miteinander verbunden. Die Daumennaht 32b ist teilweise, nämlich in einem seitlichen Daumenbereich und in einem Bereich der Daumenspitze als außen liegende Naht 32b ausgebildet.

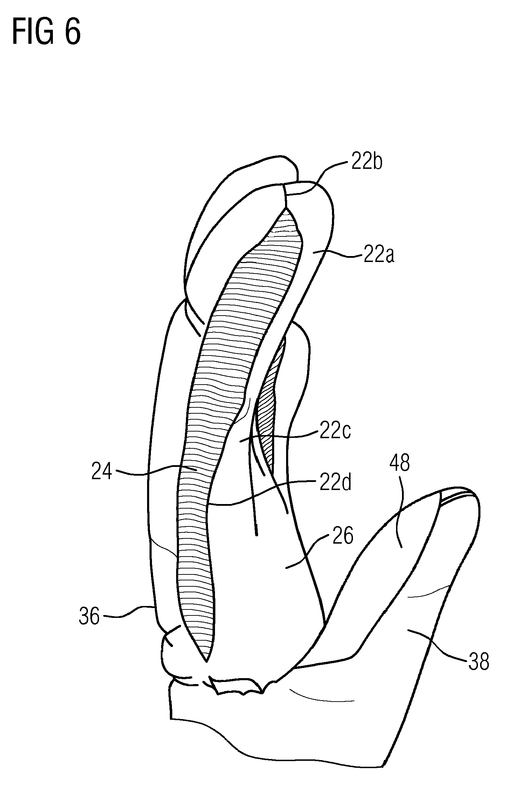

FIG 6 zeigt eine zeigefingerseitige Ansicht des Handschuhs 50 gemäß dem Ausführungsbeispiel nach FIG 3. Das Innenhandteil 14 überlappt das Außenhandteil 36 in dem Daumenbereich 32a zumindest teilweise und der überlappende Bereich 48 ist auf einer hinteren Daumenseite bzw. auf einer Außenseite 38 des Außenhandteils 36 mit diesem verbunden. Die dem Zeigefingerbereich 22 zugewandte Seite des Daumenbereichs 32 und eine dort angeordnete Naht wird beispielsweise beim Fangen eines Balles besonders strapaziert, sodass eine Verstärkung dieses Bereichs und die Vermeidung bzw. Verdeckung einer Naht an dieser Stelle von Vorteil ist.

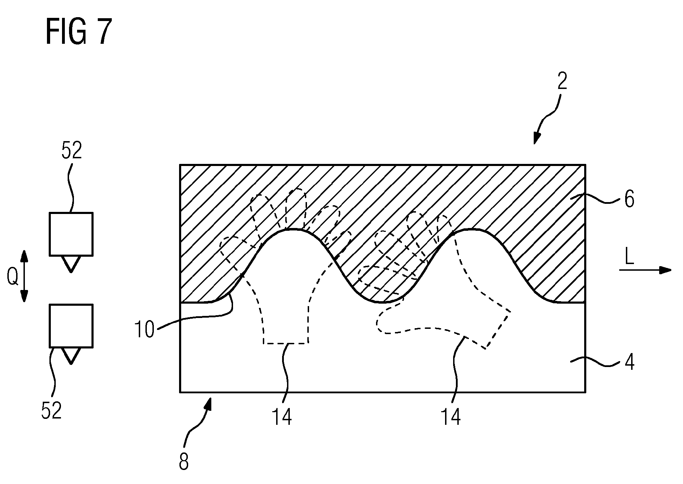

In FIG 7 ist ein Verfahren zur Herstellung eines Handschuhs 50 aus dem Material 2 gezeigt. Die erste Materialschicht 4 und die zweite Materialschicht 6 werden mithilfe von Aufbringvorrichtungen 52 gleichzeitig auf die Trägerschicht 8 aufgebracht. Hierfür wird die Trägerschicht 8 kontinuierlich in einer Längsrichtung L bewegt. Um einen in Längsrichtung L zumindest teilweise gekrümmten Verlauf des Übergangsbereichs 10, also einen wellenförmigen Verlauf zu erzeugen, werden die Aufbringeinrichtungen 52 in Querrichtung Q zeitweise hin und her bewegt. Einen annähernd parallel zu der Laufrichtung L verlaufender Übergangsbereich 10 wird erreicht, wenn die Aufbringvorrichtungen 52 nicht in Querrichtung Q bewegt werden.

Der Abstand der Aufbringeinrichtungen 52 zueinander und die Menge an Material für die erste Materialschicht 4 und für die zweite Materialschicht 6, die auf die Trägerschicht 8 aufgegossen werden, werden derart gewählt, dass die erste Materialschicht 4 und die zweite Materialschicht 6 unmittelbar aneinandergrenzen. Durch einen nachfolgenden Vulkanisationsschritt können die beiden Materialschichten 4, 6 zusätzlich fest miteinander verbunden werden.

Aus dem Material 2 wird in einem nachfolgenden Schritt das Innenhandteil 14 für einen Handschuh gefertigt. Hierfür wird für einen Handschuh 50 gemäß der in FIG 3 gezeigten Ausführungsform ein Stanzwerkzeug derart auf dem Material positioniert, dass die Fingerbereiche 16, 18, 20, 22 und der Daumenbereich 32a des Innenhandteils 14 aus einem Teil des Materials, wo die zweite Materialschicht 6 auf die Trägerschicht 8 aufgebracht ist, ausgestanzt werden (in FIG 7 links gestrichelt dargestellt). Um ein Innenhandteil 14 gemäß des in FIG 4 gezeigten Handschuhes 50 zu fertigen, wird das Stanzwerkzeug weiter gedreht, sodass lediglich die Fingerbereiche 16, 18, 20, 22 von dem auf die Trägerschicht 8 aufgebrachten zweiten Materialschicht 6 gebildet werden. Der Daumenbereich 32 sowie der Handtellerbereich 26 bestehen somit aus der auf die Trägerschicht 8 aufgebrachten ersten Materialschicht 4 (in FIG 7 rechts gestrichelt dargestellt). Das Material 2 ermöglicht somit auf einfache Weise die Herstellung eines Innenhandteils 14, bei dem unterschiedliche Bereiche von der gewünschten Materialschicht 4, 6 gebildet sind.

In einem weiteren Schritt wird das Innenhandteil 14 mit einem Außenhandteil 36 entweder direkt oder über einen Schichtel 24 vernäht, um einen Handschuh 50 zu bilden. Abschließend kann beispielsweise ein Laschenklettverschluss 30 mit dem Handgelenksbereich 28 vernäht oder das Innenhandteil 14 und/oder das Außenhandteil 36 mit weiteren Gestaltungselementen versehen werden.

### Bezugszeichenliste

- 2: Material/Textilbahn
- 4: erste Materialschicht
- 6: zweite Materialschicht
- 8: Trägerschicht
- 10: Übergangsbereich
- 12: Oberfläche
- 14: Innenhandteil
- 16: Kleinfingerbereich
- 16a: vorderer Kleinfingerbereich
- 16b: vordere Kleinfingernaht
- 16c: seitlicher Kleinfingerbereich
- 16d: seitliche Kleinfingernaht
- 18: Ringfingerbereich
- 18a: vorderer Ringfingerbereich
- 18b: vordere Ringfingernaht
- 18c: seitlicher Ringfingerbereich
- 18d: seitliche Ringfingernaht
- 20: Mittelfingerbereich
- 20a: vorderer Mittelfingerbereich
- 20b: vordere Mittelfingernaht
- 20c: seitlicher Mittelfingerbereich
- 20d: seitliche Mittelfingernaht
- 22: Zeigefingerbereich
- 22a: vorderer Zeigefingerbereich
- 22b: vordere Zeigefingernaht
- 22c: seitlicher Zeigefingerbereich
- 22d: seitliche Zeigefingernaht
- 24: Schichtel
- 26: Handtellerbereich
- 28: Handgelenkbereich
- 30: Laschenklettverschluss
- 32: Daumenbereich
- 32a: vorderer Daumenbereich
- 32b: Daumennaht
- 32c: unterer Daumenbereich
- 34: Handkantennaht
- 36: Außenhandteil
- 38: Außenseite
- 40: Ausnehmung
- 42: Zwischenschicht
- 44: Randbereich
- 46: Randbereich
- 48: überlappender Bereich
- 50: Handschuh
- 52: Aufbringeinrichtung
- L: Längsrichtung
- Q: Querrichtung

## Patentansprüche

1. Material (2) für einen Handschuh (50), insbesondere einen Torwarthandschuh, umfassend eine Trägerschicht (8), einer erste Materialschicht (4) und zumindest eine zweite Materialschicht (6), wobei die erste Materialschicht (4) und die zumindest eine zweite Materialschicht (6) derart nebeneinander auf der Trägerschicht (8) aufgebracht sind, dass die erste Materialschicht (4) und die zumindest eine zweite Materialschicht (6) in einem Übergangsbereich (10) unmittelbar aneinandergrenzen.

2. Material (2) nach Anspruch 1, **dadurch gekennzeichnet, dass** die erste Materialschicht (4) und die zweite Materialschicht (6) eine gemeinsame Oberfläche (12) ausbilden, wobei eine Dicke (D₁) der ersten Materialschicht (4) und eine Dicke (D₂) der zweiten Materialschicht (6) über die Oberfläche (12) konstant ist.

3. Material (2) nach einem der Ansprüche 1 oder 2, wobei der Übergangsbereich (10) zwischen der ersten Materialschicht (4) und der zweiten Materialschicht (6) bezogen auf eine Längsrichtung (L) der Trägerschicht (8) einen zumindest teilweise gekrümmten Verlauf aufweist.

4. Material (2) nach einem der vorhergehenden Ansprüche, **dadurch gekennzeichnet, dass** die erste Materialschicht (4) und die zweite Materialschicht (6) jeweils aus einer Latexmasse gebildet sind.

5. Material (2) nach einem der vorhergehenden Ansprüche, **dadurch gekennzeichnet, dass** sich die erste Materialschicht (4) und die zumindest eine zweite Materialschicht (6) zumindest hinsichtlich einer Materialeigenschaft unterscheiden.

6. Material (2) nach einem der vorhergehenden Ansprüche, **dadurch gekennzeichnet, dass** sich die erste Materialschicht (4) und die zumindest eine zweite Materialschicht (6) hinsichtlich ihrer Farbe und/oder Griffigkeit und/oder Abriebfestigkeit und/oder Härte unterscheiden.

7. Handschuh (50), insbesondere Torwarthandschuh, mit einem Innenhandteil (14) und einem Außenhandteil (36), wobei das Innenhandteil (14) und das Außenhandteil (36) entweder direkt miteinander oder mit einem zwischen Innenhandteil (14) und Außenhandteil (36) angeordneten Schichtel (24) durch Nähte (16b, 16d, 18b, 18d, 20b, 20d, 22b, 22d, 32b) miteinander verbunden sind, **dadurch gekennzeichnet, dass** zumindest das Innenhandteil (14) aus einem Material (2) nach einem der Ansprüche 1 bis 6 gefertigt ist.

8. Handschuh (50) nach Anspruch 7, **dadurch gekennzeichnet, dass** das Innenhandteil (14) und das Außenhandteil (36) zumindest in einem seitlichen Zeigefingerbereich (22c), in einem seitlichen Mittelfingerbereich (20c), in einem seitlichen Ringfingerbereich (18b) und in einem seitlichen Kleinfingerbereich (16c) mit einem zwischen Innenhandteil (14) und Außenhandteil (36) angeordneten Schichtel (24) durch innen liegende Nähte (16d, 18d, 20d, 22d) miteinander verbunden sind, wobei das Innenhandteil (14) und das Außenhandteil (36) jeweils mit dem Schichtel (24) vernäht sind und so einen Fingeraufnahmeraum formen.

9. Handschuh (50) nach einem der Ansprüche 7 oder 8, **dadurch gekennzeichnet, dass** das Innenhandteil (14) und das Außenhandteil (36) wenigstens in einem Daumenbereich (32) durch eine Daumennaht (32b) miteinander verbunden sind, wobei die Daumennaht (32b) zumindest teilweise als außen liegende Naht ausgebildet ist.

10. Handschuh (50) nach einem der Ansprüche 7 bis 9, **dadurch gekennzeichnet, dass** das Innenhandteil (14) das Außenhandteil (36) in dem Daumenbereich (32) zumindest teilweise überlappt, wobei ein das Außenhandteil (36) überlappender Bereich (48) des Innenhandteils (14) auf einer Außenseite (38) des Außenhandteils (36) mit diesem verbunden ist.

11. Handschuh (50) nach einem der Ansprüche 7 bis 10, **dadurch gekennzeichnet, dass** das Innenhandteil (14) zwischen dem Daumenbereich (32) und dem Zeigefingerbereich (22) eine Ausnehmung (40) und eine die Ausnehmung (40) vollständig überdeckende Zwischenschicht (42) aufweist, wobei das Innenhandteil (14) und das Außenhandteil (36) jeweils in einem Randbereich (44, 46) der Ausnehmung (40) mit der Zwischenschicht (42) verbunden sind.

12. Handschuh (50) nach einem der Ansprüche 7 bis 11, **dadurch gekennzeichnet, dass** das Innenhandteil (14) zumindest in einem Handtellerbereich (26) von der Trägerschicht (8) und der darauf aufgebrachten ersten Materialschicht (4) gebildet ist.

13. Handschuh (50) nach einem der Ansprüche 7 bis 12, **dadurch gekennzeichnet, dass** das Innenhandteil (14) zumindest in dem Zeigefingerbereich (22), dem Mittelfingerbereich (20), dem Ringfingerbereich (18) und dem Kleinfingerbereich (16) von der Trägerschicht (8) und der darauf aufgebrachten zweiten Materialschicht (6) gebildet ist.

14. Verfahren zur Herstellung eines Handschuhs (50), insbesondere eines Torwarthandschuhes, nach einem der Ansprüche 7 bis 13, bei dem
- eine erste Materialschicht (4) und zumindest eine zweite Materialschicht (6) auf eine Trägerschicht (8) derart aufgebracht werden, dass sie unmittelbar aneinandergrenzen, sodass ein Material (2) umfassend die Trägerschicht (8), die erste Materialschicht (4) und die zumindest eine zweite Materialschicht (6) gebildet wird,
- aus dem Material (2) zumindest ein Innenhandteil (14) des Handschuhs (50) gefertigt wird,
- das Innenhandteil (14) und ein Außenhandteil (36) entweder direkt miteinander oder mit einem zwischen Innenhandteil (14) und Außenhandteil (36) angeordneten Schichtel (24) durch Nähte (16b, 16d, 18b, 18d, 20b, 20d, 22b, 22d, 32b) miteinander verbunden werden.

15. Verfahren nach Anspruch 14, **dadurch gekennzeichnet, dass** die erste Materialschicht (4) und die zweite Materialschicht (6) gleichzeitig auf die Trägerschicht (8) aufgebracht werden, wobei die Trägerschicht (8) in einer Längsrichtung (L) kontinuierlich bewegt wird und die jeweilige Aufbringeinrichtung (52) für die erste Materialschicht (4) und die zweite Materialschicht (6) in einer Querrichtung (Q) bewegt werden.
